# EUROPEAN PATENT SPECIFICATION

(11) **EP 4 000 992 B1**
(45) Date of publication and mention of the grant of the patent: **07.01.2026**
(21) Application number: 20208727.6
(22) Date of filing: 19.11.2020
(51) Int. Cl.: B60L 53/16, B60L 53/302, H01R 9/24, H01R 13/713, B60L 53/31

(54) **VEHICLE CHARGING STATION**
FAHRZEUGLADESTATION
STATION DE CHARGEMENT DE VÉHICULE

(43) Date of publication of application: 25.05.2022
(73) Proprietor: ABB E-mobility B.V., 2629 JG Delft (NL)
(72) Inventor: HEMRLE, Jaroslav, 5405 Baden-Dättwil (CH); KAUFMANN, Lilian, 5413 Birmenstorf (CH); GARCIA-FERRE, Francisco, 5400 Baden (CH); DOIRON, Charles, 4052 Basel (CH); BORTOLATO, Matteo, 35010 Trebaseleghe (PD) (IT); PARESCHI, Diego, 2629JD Delft (NL)
(74) Representative: Zimmermann & Partner Patentanwälte mbB

(56) References cited:
- EP-A2- 3 257 701
- WO-A1-2017/182484
- CN-A- 110 626 197
- CN-A- 111 572 375
- DE-A1- 102015 101 140
- DE-A1- 102015 221 571
- DE-A1- 102016 211 464
- DE-A1- 102017 222 872
- US-B1- 10 449 871

## Description

### FIELD OF THE INVENTION

The present invention relates to a vehicle charging station for an electric vehicle, and a use of heat pipe in a vehicle charging station.

### BACKGROUND

One limiting factor in charging cables for electric vehicles is the heat that is generated when high currents flow through the cable and the electrical connector from the charging station to the battery of a vehicle. The heat may be actively conducted away from the heat sources using liquids. In this way current rates over 500 A are achieved. For this kind of cooling battery charging connectors are designed such that they remove heat from the heat source actively or passively, for example using liquid cooled cable or openings or hollows in the enclosure or material of the enclosure that does not insulate the heat in the enclosure. Such designs may not be effective or lead to a high weight of the charging cable. One reason for high temperatures after a short charging period in some situations is, that the temperature starting point is already at high level. This is the case when there is not enough time between two charging periods for the charging connector to cool down.

With respect to the state of the art, reference is made to patent documents DE 10 2015 101140 A1, EP 3 257 701 A2, CN 111 572 375 A and US 10 449 871 B1.

DE 10 2015 101140 A1 describes a charging station for transmitting electrical energy to an energy receiver. The charging station includes a charging plug for coupling to a corresponding connection device of the energy receiver and for transmitting electrical energy. The charging plug is electrically coupled to the charging station by means of a supply cable. Further, charging station includes a holding device arranged in the charging station for holding the charging plug in a parked position. The charging station is characterized in that it further comprises a cooling device by means of which the charging plug located in the parked position can be cooled.

EP 3 257 701 A2 relates to a charging device for an energy storage device of an electrically powered vehicle, comprising a charging plug for transmitting an electrical charge to the energy storage device of the motor vehicle, a charging line for connecting the charging plug to a power grid, and a charging column with a docking station for receiving the charging plug when not in use and for connecting the charging line to the power grid, wherein a cooling device for cooling the charging plug is arranged in the docking station.

CN 111 572 375 A describes a charging pile with a damp-proof function. The charging pile structurally comprises a charging pile, a charging gun, an electric lead, a base and a control panel. The base is welded with the charging pile; the control panel is fixedly connected with the charging pile in an embedded mode. The charging gun is electrically connected with the charging pile through the electric lead; after the charging gun is used, the charging head is inserted into the charging pile; rightward thrust is generated on a heat conduction block on the charging head through the surface of the charging pile; the heat conduction block can slide rightwards along the outer frame; therefore, the heat conduction block can conduct heat on the charging head into the heat dissipation block, and heat can be exhausted quickly through the heat dissipation block; when the charging head is inserted into the automobile charging port, the attaching plate can swing downwards along the block body through pushing force generated by the inner wall of the charging port to the attaching plate on the plug, and the attaching plate can be pushed outwards through the spring back piece to be tightly attached to the inner wall of the automobile charging port.

US 10 449 871 B1 describes a charging system including an electrical power terminal, a power cable, and a cooling tube. The electrical power terminal includes a pin and a block. The block has a front side and a rear side. The pin extends from the front side of the block to a distal end of the pin. The block includes a termination pad surface. The block defines a port therethrough that is spaced apart from the termination pad surface. The power cable is mechanically coupled and electrically connected to the termination pad surface of the block. The cooling tube extends into the port of the block, and is configured to absorb and dissipate heat from the block.

### SUMMARY

The objective of the invention is to provide an improved thermal performance of a battery charging connector.

The problem is solved by the subject-matter of the independent claims. Embodiments are provided by the dependent claims, the following description and the accompanying figures.

The described embodiments similarly pertain to the charging station, and the use of a heat pipe in a vehicle charging station. Synergetic effects may arise from different combinations of the embodiments although they might not be described in detail.

Technical terms are used by their common sense. If a specific meaning is conveyed to certain terms, definitions of terms will be given in the following in the context of which the terms are used.

According to the invention, a vehicle charging station is provided comprising a holder configured to hold a battery charging connector, and an active cooling device configured to remove heat from a heat source of the battery charging connector when the battery charging connector is on the holder, and dissipate the heat into the ambient air. In other words, as an alternative or additional measure to a cooling arrangement in or attached to the charging connector, the vehicle charging station comprises an arrangement for cooling the charging connector, or, to be more precise, the heat source of the charging connector. The heat source is a power contact of the battery charging connector, that is in contact with the power contact of the socket on vehicle-side during charging the battery of the vehicle. The vehicle charging station comprises a liquid-cooled rod configured to be plugged into the power contacts. The active cooling device is a pump connected to the liquid-cooled rod and configured to provide the liquid flow to and from the rod.

The transition of the load current from the charging connector to the socket on vehicle-side generates heat on both sides, so that the heat can't be dissipated to the vehicle-side. Thus, the heat remains in the power contacts of the charging connector and is conducted also to the cable attached to the power contact, which therefore may also be seen as a heat source. Since the possibilities to dissipate the heat in the charging connector are limited, the heat remains in the connector also after the charging procedure is finished, and decreases slowly with time. This implies that if a further charging session is started immediately after the previous one, the power contacts are still hot, such that the starting point for the temperature increase is already at a high level. Therefore, the presented first aspect provides an arrangement to reduce the heat of the power contacts of the charging connector as soon as the charging connector is put on the holder of the charging station. For that, the station comprises at least one cooling device or arrangement, that is described by the embodiments in the following.

In this disclosure the term "battery charging connector" is used for the charging connector of an electric vehicle. The battery charging connector is connected to the vehicle charging station with a cable.

According to an embodiment, the cooling device is a passive cooling device configured to be plugged into a socket of the battery charging connector, thereby providing a thermal connection to the heat source of the battery charging connector. That is, the charging station or, to be more precise, the holder receives the battery charging connector, or from view of the user, the user plugs the charging connector into the passive cooling device. The passive cooling device, therefore, has a shape that is suitable for connecting directly to the heat source. Therefore, the design of the passive cooling device arrangement and/or the holder may be similar to that of the counter-part of the charging connector, which is the socket on vehicle-side, at least with respect to the reception of the connector and the contact between the power connector of the charging connector and the cooling device. The cooling device may thus have a contact corresponding to the power contact on vehicle-side, however, with a cooling-functionality instead of a power conducting functionality. It is to be noted, that there may be more than one contact, which may be cooled in the same way.

According to an embodiment, the passive cooling device comprises cooling fins. That is, the cooling device has a portion that is - when plugged in - inside the charging connector that is in contact with the power contact of the charging connector and a portion outside the charging connector, which is designed such that it provides an extended surface suitable for heat dissipation. The extended surface is the surface of the cooling fins.

According to an embodiment, the passive cooling device is a heat pipe comprising condenser fins. A heat pipe comprises an evaporator and a condenser, usually provided with fins, wherein the vapor is generated in the evaporator due to the heat of the heat source, where it is attached to. The vapor flows from the evaporator via a tube or a pipe to the condenser, where the vapor is condensed again to water. This passive liquid-based cooling device provides an efficient cooling of the power contacts.

According to an embodiment, the vehicle charging station further comprises an active cooling device. Active means, that the cooling device is driven by electrical power. Although the arrangement comprising the active cooling device may be integral with the heat receiving portion in contact with the power contact of the charging connector, the heat receiving portion is defined here as "passive cooling device" or device, such that the active cooling device may be regarded as a combination with a passive cooling device in this case.

According to an embodiment, the active cooling device is a fan. The fan may circulate the ambient air of the holder and the connector, such that the heat can be removed generally.

According to an embodiment, the active cooling device is configured to direct an air flow to at least one passive cooling device in the charging station or to at least one passive device of the charging connector. For example, a fan is directed such that the air flow hits the cooling fins or the condenser fins of the passive cooling device of the charging station. In another example, the connector comprises one or more heat pipes with condenser fins outside its external enclosure. In case the passive cooling device is a fan, the fan may be configured such that the air from the fan is directed to these condenser fins.

According to an embodiment, the vehicle charging station further comprises a temperature sensor and a control circuit, wherein the control circuit is configured to control the active cooling device in dependence on the temperature. That is, the active cooling device is switched on, for example, only if there is a need for cooling the charging connector. There are several possibilities at which location a temperature sensor may be arranged. For example, the sensor is arranged somewhere on the passive cooling device, or attached somewhere in the holder measuring the temperature of the air flow received from the fan. As an example, the control circuit may be configured to switch the active cooling device always on when detecting that the charging connector is put on the holder, and off when detecting that the charging connector is removed from the holder. It may further be configured to control the intensity of the air flow depending on the temperature.

According to an embodiment, the vehicle charging station further comprises a clock and a control circuit, wherein the control circuit is configured to activate and/or de-activate the active cooling device in dependence on pre-defined times using the clock. The active period may be defined according to a known temperature profile, which indicates the time necessary to cool the heat source down. It may further depend on the battery charging process, e.g. time and electrical power output.

According to the invention, the active cooling device is a pump configured to provide liquid cooling for the passive cooling device. The liquid may be in direct contact with the passive cooling device, for example, flowing around the fins, or separated, however such, that the liquid absorbs and dissipates the heat.

According to an embodiment, the vehicle charging station further comprises a mechanical temperature switch to activate and/or de-activated the active cooling device. That is, for example, the active cooling device may be switched on and off by a passive temperature sensitive switch such as one based on a bimetal strip instead of a temperature sensor. The bimetal strip may be arranged, for example, on the passive cooling device.

The vehicle charging station comprises a liquid-cooled rod configured to be plugged into the power contacts, wherein the active cooling device is a pump connected to the liquid-cooled rod and configured to provide the liquid flow to and from the rod. For example, the liquid may flow inside or outside the rod. The diameter of the rod portion configured to be in contact with the power contacts of the charging connector, i.e., the internal portion, may differ from the portion external of the charging connector, such that the liquid can effectively be applied to the external portion. The rod may further comprise a U-shaped tube for the circulating liquid that is connected to the internal portion to be plugged into the charging station.

According to an aspect, a use of an active cooling device, such as a fan, in a charging station according to any embodiments described herein is provided. In particular, the active cooling device is used to cool down the heat source of a vehicle charging connector when the vehicle charging connector is not in operation.

According to an aspect, a use of a heat pipe in a vehicle charging station according to any embodiments described herein is provided.

These and other features, aspects and advantages of the present invention will become better understood with reference to the accompanying figure and the following description. Identical or equivalent elements are in principle provided with the same reference signs.

### SHORT DESCRIPTION OF THE FIGURES

Fig. 1 shows a diagram of a battery charging connector with a heat pipe.
Fig. 2a shows an illustration of a twin heat pipe with two heat pipes in parallel with condenser fins.
Fig. 2b shows an illustration of a grid which may be used to protect a heat pipe condenser on a battery charging connector.
Fig. 3 shows temperature profiles of a charging cycle.
Fig. 4 shows a thermal network diagram of the battery charging connector.
Fig. 5 shows a diagram of a battery charging connector, which parts may be located outside or inside the charging station when resting on a holder, and a fan inside the charging station.
Fig. 6a shows an arrangement with a fan in the charging station.
Fig. 6b shows an arrangement with two fans in the charging station.
Fig. 7 shows a passive and an active cooling device in the charging station.

### DETAILED DESCRIPTION OF EMBODIMENTS

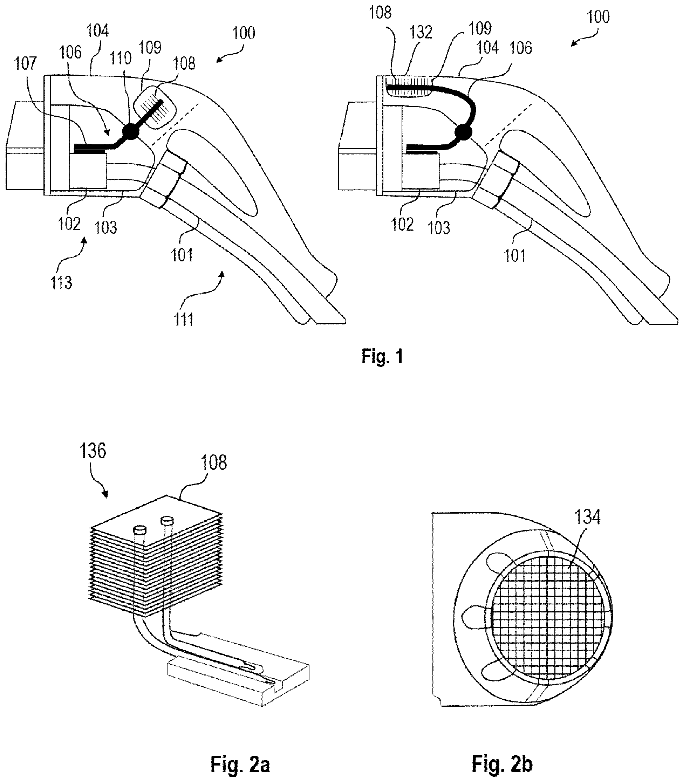

Fig. 1 shows a charging connector 100 that comprises an external enclosure 104. The charging connector 100 is configured to receive and guide a cable 101 from a back end 111 to a front end 113 of the battery charging connector 100, and to enclose a compartment 102 or contact holder 102 in the front end 113 accommodating power contacts. The cable 101 is linked to the compartment or contact holder 102 in the front end 113 inside of an internal casing 103. The function of the internal casing 103 is to ensure electrical insulation, mechanical strength, and to prevent water and dirt contamination. For this reason, casing 103 is massively sealed, and may have in some designs also a nearly completely potted structure. Also the contact holder 102 can be treated in this way. The combination of components 102 and 103 is further enclosed by the external enclosure 104. A heat pipe 106 as heat conductor is arranged inside the enclosures 103, 104. The heat pipe 106 is attached to the connector 102, where the heat is absorbed by the evaporator 107. The heat is then transported from the evaporator 107 via seal 110 to the condenser 109 with condenser fins 108. The evaporator of the heat pipe 106 is attached to the connector 102 at one or multiple locations. The heat pipe 106 is an integral part of the internal enclosure 102, and is sealed at point 110 to pass to the outside of 102. The heat pipe 106 may furthermore be connected to any critical part of the inner enclosure 103. The heat pipe 106 is attached to the heat sources such that a good thermal contact is ensured. Electrically, the heat pipe 106 may be insulated, for example, by a solid insulation between the heat pipe evaporator end 107 and the life parts. Alternatively, the heat pipe 106 may be grounded. The condenser 108 may be located outside the external enclosure 104 and, for example, protected by a grid, or inside the external enclosure, wherein the external enclosure may comprise air channels or openings 132 which expose the heat pipe condenser end 109 to the ambient air. These channels may consist, for example, of an open hollow, which on the side of the external enclosure 104 may have a cover to protect the user from contact with the heat pipe 106. An illustration of such a cover with a grid 134 is shown in Fig. 2b, where the heat pipe condenser 108 is exposed to the environment, where it is brought to a suitable surface of the external connector with fins exposed, possibly just covered by a protective grid 134.

Fig. 2b shows a twin heat pipe 136 with two heat pipes in parallel with a set of condenser fins 108 attached to the pipes. The condenser fins 108 improve the heat emission due to the enhanced surface at the heat pipe condenser end 109. The shown fins 108 may be adapted to the available space in the external enclosure 104.

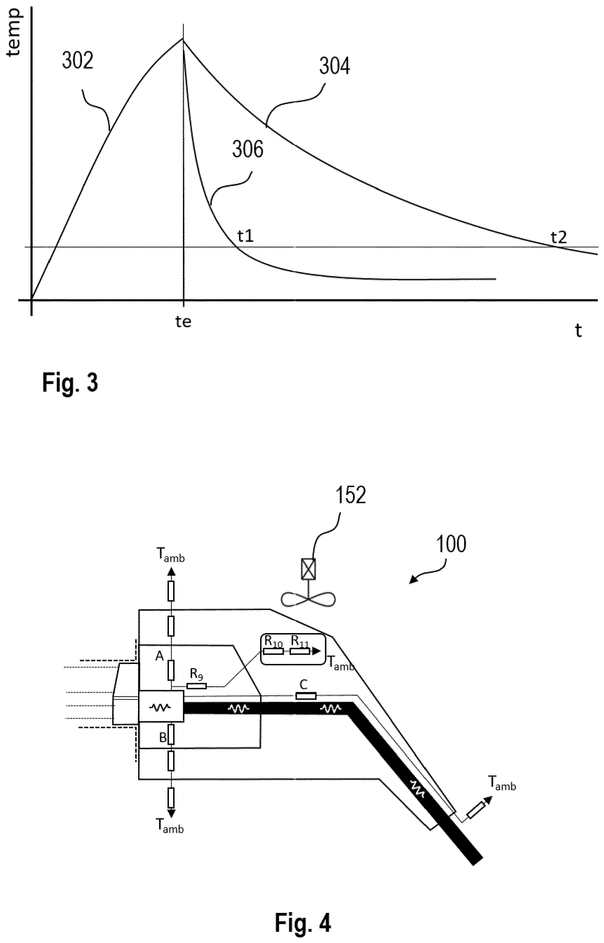

In many situations, it is desirable to cool the connector 100 as fast as possible to recover the initial state, in order to prepare the connector 100 for the next charging, etc. In Fig. 3, the charging occurs from time 0 to time "te", at which point the current is turned off, as shown by curve 302. Without additional measures, the connector 100 starts then to cool along curve 304, at rates that depend strongly on the design, ambient conditions, etc. If at time "te" the connector 100 is placed to the charging station, in this disclosure also called charging post, and forced cooling is initiated, the cooling times will be radically shortened, following curve 306, in which case the charger is ready for the next charging at time t1, which is much earlier than t2.

Therefore, a means of forced cooling, i.e., forced convection, is added to the system, in order to remove the heat faster, as described below. The forced cooling can be applied, in principle, to any area of the connector 100. The heat exhaust in area 108 is considered to be passive and measures can be taken by proper design to maximize the thermal performance, by, for example, proper sizing and shape of the air channels. The air flow is further improved by using thermal expansion to drive the flow more efficiently.

This modification significantly reduces the thermal resistance of the connector system, and extends the ratings of the system, in transient and steady state. In this modified arrangement significant amount of the thermal losses are evacuated from the system just by the heat pipe and the condenser fins. Therefore, means to significantly reduce cooling times of the connector when not in operation by adding cooling fan to enhance convection are provided. The primary target for this measure is in the area around the cooler at the condenser side of the heat pipe 106, which presents significant thermal resistance unless very large and complicated fin structures are used. The forced cooling is in particular beneficial in the design with heat pipes. In this case the heat is primarily removed at a well-defined point, which is the condenser/fin area 108. Focused air flow in this area can assist much better than the case without the heat pipe 106 and air blown towards the whole connector 100. In the former case, the convection is greatly enhanced in an area which has a fast thermal link with the hottest zone of the connector, that is, area 102, where the contacts lie. In the latter, the internal structure is still fairly insulated and the effect of forced convection around the connector is limited. Fig. 3 shows the intended effect. In fast charging/high current charging situations, after charging starts, temperature increases as shown by curve 302, until charging is finished, or thermal limit is reached. At this point charging is stopped, interrupted, or charging current is reduced. In principle, also steady state can be reached in which case the charging time can be extended towards very long times.

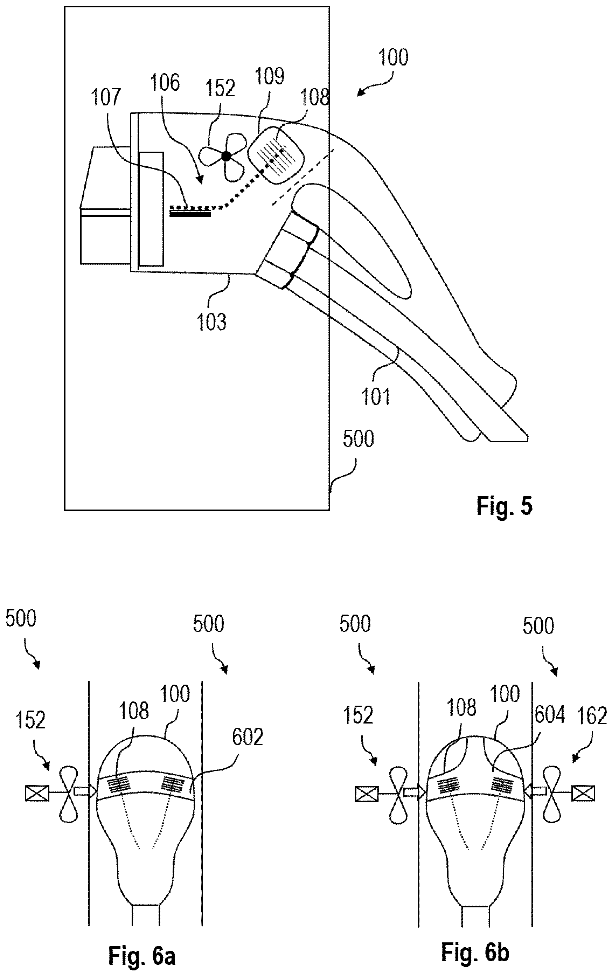

Fig. 4 shows a thermal network diagram of the battery charging connector. The heat pipe 106 in the inner enclosure 103 is taken into account by R9, and in the outer enclosure by the resistances R10 corresponding to the pipe in the external enclosure 104, and R11 corresponding to the fins 108. The heat absorbed by the evaporator end 107, R9 of the heat pipe 106 is led by the heat pipe 106 to the condenser area 106, R10, R11. The thermal paths are enhanced by adding fan 152 or other forced convection means to reduce the thermal resistance R11 between the condenser 109 and the ambient. In practice, the enhancement can be very radical. For passive cooler, the heat transfer coefficient may be of order of units of W/m2K, while with fan 152 assisted operation tens or low hundreds of W/m2K may be achievable. The cooling fan 152 may operate continuously, or at given intervals. Therefore, the charging station 500 may comprise a clock and a control unit. The fan 152 may be installed on the connector 100 or elsewhere. In an embodiment, at least one cooling fan 152 is installed at the charging station 500, near the area where the connector 100 is rested between charging use, as indicated in Fig. 5. The cooling may be initiated only temporarily.

Fig. 5 shows schematically a charging station 500 including a fan 152, or a holder with a fan 152, that increases the convection around the area 109 of the cooler, e.g. fins 108, of a heat pipe 106 in a passively cooled connector 100.

Figs. 6a and 6b show possible arrangements from back view. The heat pipe condenser fins 108 are placed in a channel, through which fan 152 passes air. Various arrangements, depending on the position of the condensers, fin design, number of heat pipes are possible.

For example, in Fig. 6a one fan with an air channel 602 to two fin arrangements 108 is shown. In Fig. 6b, two fans 152, 162 are shown, one for each fin arrangement 108, wherein the single air channels 604 combine such that the air is directed in an orthogonal direction away from the fin arrangements 108.

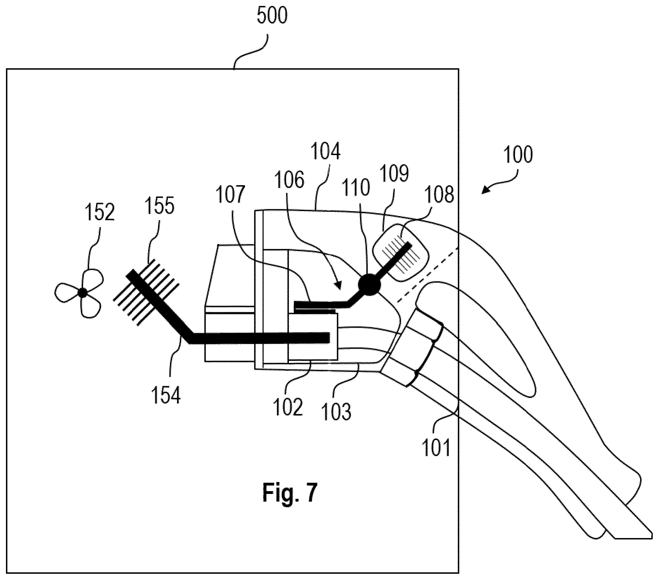

Fig. 7 shows an example with a charging station 500 comprising a holder with heat pipes 154 connected to cooler fins 155 that are cooled by a fan 152. The heat pipes 154, 106 connect with the area around the contact elements 102 of the passively cooled connector 100. The holder in the charging station may be provided with the equivalent of a car socket, which creates a good thermal contact with the area of the contact elements 102 of the connector 100. The in this way replicated "car socket" contains heat pipes 154 instead of contact elements, and the heat pipes 154 are connected to condenser fins 155 inside the charging station 500. A fan 152 can be used to enhance convection around the condenser fins 155 inside the charging station 500.

However, the invention is not limited to an arrangement with condenser fins 155 and fans 152 cooling the fins. In general, the holder comprising the replicated car socket can be cooled in any way. For example, liquid cooling may also be applied. In this case, for example a cooling circuit may be used that also cools the power electronics inside the charging station 500.

Therefore, no expensive actively cooled cable structures are necessary. The presented embodiments and arrangements are independent of the design of the battery charging connector. In particular, they are independent of the design, e.g., with respect to openings and slots in the external enclosure of the connector 100. Further, the presented embodiments are suitable for a double-casing design with an external enclosure 104 and an internal enclosure 102 .

Other variations to the disclosed embodiments can be understood and effected by those skilled in the art in practicing the claimed invention, from the study of the drawings, the disclosure, and the appended claims. In the claims the word "comprising" does not exclude other elements or steps and the indefinite article "a" or "an" does not exclude a plurality. The mere fact that certain measures are recited in mutually different dependent claims does not indicate that a combination of these measures cannot be used to advantage. Any reference signs in the claims should not be construed as limiting the scope of the claims. The invention is defined by the claims.

## Claims

1. Vehicle charging station (500) comprising:
a holder configured to hold a battery charging connector (100); and
an active cooling device configured to remove heat from a heat source of the battery charging connector (100) when the battery charging connector is on the holder, and dissipate the heat into the ambient air,
wherein the heat source is a power contact of the battery charging connector, that is in contact with the power contact of the socket on the vehicle-side during charging the battery of the vehicle,
**characterized in that**:
the vehicle charging station (500) comprises a liquid-cooled rod configured to be plugged into the power contacts, and
the active cooling device is a pump connected to the liquid-cooled rod and configured to provide the liquid flow to and from the rod.

2. Vehicle charging station (500) according to claim 1, wherein the vehicle charging station (500) further comprises a temperature sensor and a control circuit, wherein the control circuit is configured to control the active cooling device in dependence on the temperature measured by the temperature sensor.

3. Vehicle charging station (100) according to claim 1 or 2, wherein the vehicle charging station (500) further comprises a clock and a control circuit, wherein the control circuit is configured to activate and/or de-activate the active cooling device in dependence on pre-defined times using the clock.

4. Vehicle charging station (500) according to any of claims 1 to 3, wherein the vehicle charging station (500) further comprises a mechanical temperature switch to activate and/or de-activated the active cooling device.

5. Use of an active cooling device (130) in a vehicle charging station (500) according to any of the previous claims.

## Patentansprüche

1. Fahrzeugladestation (500), die Folgendes umfasst:
einen Halter, der konfiguriert ist, einen Batterieladeverbinder (100) zu halten; und
eine aktive Kühlvorrichtung, die konfiguriert ist, Wärme von einer Wärmequelle des Batterieladeverbinders (100) abzuführen, wenn sich der Batterieladeverbinder an dem Halter befindet, und die Wärme an die Umgebungsluft abzugeben,
wobei die Wärmequelle ein Leistungskontakt des Batterieladeverbinders ist, der während des Ladens der Batterie des Fahrzeugs mit dem Leistungskontakt der Buchse auf Seiten des Fahrzeugs in Kontakt ist,
**dadurch gekennzeichnet, dass**:
die Fahrzeugladestation (500) einen durch Flüssigkeit gekühlten Stab umfasst, der konfiguriert ist, in die Leistungskontakte eingesteckt zu werden, und
die aktive Kühlvorrichtung eine Pumpe ist, die mit dem durch Flüssigkeit gekühlten Stab verbunden ist und konfiguriert ist, die Flüssigkeitsströmung zu und von dem Stab zu bewirken.

2. Fahrzeugladestation (500) nach Anspruch 1, wobei die Fahrzeugladestation (500) ferner einen Temperatursensor und eine Steuerschaltung umfasst, wobei die Steuerschaltung konfiguriert ist, die aktive Kühlvorrichtung in Abhängigkeit von der durch den Temperatursensor gemessenen Temperatur zu steuern.

3. Fahrzeugladestation (100) nach Anspruch 1 oder 2, wobei die Fahrzeugladestation (500) ferner eine Uhr und eine Steuerschaltung umfasst, wobei die Steuerschaltung konfiguriert ist, die aktive Kühlvorrichtung in Abhängigkeit von im Voraus definierten Zeiten unter Verwendung der Uhr zu steuern.

4. Fahrzeugladestation (500) nach einem der Ansprüche 1 bis 3, wobei die Fahrzeugladestation (500) ferner einen mechanischen Temperaturschalter umfasst, um die aktive Kühlvorrichtung zu aktivieren und/oder zu deaktivieren.

5. Verwendung einer aktiven Kühlvorrichtung (130) in einer Fahrzeugladestation (500) nach einem der vorhergehenden Ansprüche.

## Revendications

1. Station de charge de véhicule (500), comprenant :
un réceptacle configuré pour recevoir un connecteur de charge de batterie (100) ; et
un dispositif de refroidissement actif configuré pour évacuer la chaleur d'une source de chaleur du connecteur de charge de batterie (100) lorsque le connecteur de charge de batterie se trouve sur le réceptacle, et dissiper la chaleur dans l'air ambiant,
la source de chaleur étant un contact d'alimentation du connecteur de charge de batterie, qui est en contact avec le contact d'alimentation de la prise du côté véhicule pendant la charge de la batterie du véhicule,
**caractérisée en ce que** :
la station de charge de véhicule (500) comprend une tige refroidie par liquide configurée pour être insérée dans les contacts d'alimentation, et
le dispositif de refroidissement actif est une pompe reliée à la tige refroidie par liquide et configurée pour assurer la circulation de liquide vers et depuis la tige.

2. Station de charge de véhicule (500) selon la revendication 1, la station de charge de véhicule (500) comprenant en outre un capteur de température et un circuit de commande, le circuit de commande étant configuré pour commander le dispositif de refroidissement actif en fonction de la température mesurée par le capteur de température.

3. Station de charge de véhicule (100) selon la revendication 1 ou 2, la station de charge de véhicule (500) comprenant en outre une horloge et un circuit de commande, le circuit de commande étant configuré pour activer et/ou désactiver le dispositif de refroidissement actif en fonction de temps prédéfinis à l'aide de l'horloge.

4. Station de charge de véhicule (500) selon l'une quelconque des revendications 1 à 3, la station de charge de véhicule (500) comprenant en outre un thermocontact mécanique pour activer et/ou désactiver le dispositif de refroidissement actif.

5. Utilisation d'un dispositif de refroidissement actif (130) dans une station de charge de véhicule (500) selon l'une quelconque des revendications précédentes.
